# EUROPEAN PATENT APPLICATION

(11) **EP 4 814 823 A1**
(43) Date of publication of application: **30.09.2026**
(21) Application number: 26168143.1
(22) Date of filing: 26.03.2026
(51) Int. Cl.: G06Q 10/06, G05B 19/02

(54) **SYSTEM AND METHOD FOR CONTEXT-AWARE MULTI-MODULE ROUTING AND DYNAMIC WORKFLOW EXECUTION**

(30) Priority: 28.03.2025 IN 202541030364
(71) Applicant: ABB Schweiz AG, 5400 Baden (CH)
(72) Inventor: REDDY, Nitesh, Bengaluru 562114 (IN); SHELVA, Lokesh, Karaikal 609605 (IN); K, Dharshen, Karaikal 609605 (IN); AGRAHARI, Anisha, Bangalore 560067 (IN); ROY, Shubham, Patiala 147001 (IN); K, Karthikeyan, Tiruppur 638106 (IN); PANYAM, Ravisastry, Bangalore 560092 (IN); GOUNDER, Jagadish Songapa, Bangalore 560076 (IN); RAJKUMAR, Ajaykumar, Bengaluru 560068 (IN)
(74) Representative: Zimmermann & Partner Patentanwälte mbB

(57) **Abstract**

The present disclosure relates method and system to perform context-aware multi-module routing and dynamic workflow execution for assisting a user in an industrial environment. The system comprises a master agent and a plurality of machine learning (ML) modules. The master agent is configured to receive an input and analyze the input to identify one or more tasks to fulfil the one or more user requirements. The master agent identifies one or more ML modules among the plurality of ML modules suitable to perform the one or more tasks, based on at least one of: historical usage patterns, context of the one or more tasks, and one or more keywords associated with the one or more tasks. The master agent further generates a dynamic workflow of sequence for invoking the identified one or more ML modules and executes the dynamic workflow. The master agent further generates a final result based on aggregation of the intermediate results generated by the one or more ML modules. The final result is provided as a response to the input to assist the user.

## Description

### TECHNICAL FIELD

The present disclosure generally relates to artificial intelligence (AI) powered Copilot. More particularly, the present disclosure relates to method and a multi-agent copilot system to assist users by fulfilling user requirements related to an industrial environment.

### BACKGROUND

With the rapid adoption of AI-powered copilots in various industrial applications, there is a need for efficient orchestration of multiple ML models to handle complex user requests. Traditional systems rely on static workflows and rigid module selection processes, which leads to inefficiencies when dealing with dynamic and evolving tasks. Current AI/ML integration frameworks face significant challenges in managing the dynamic invocation of multiple models and modules based on contextual user prompts. These systems often lack the flexibility to integrate a variety of Al/ML models, large language models (LLMs), and Industrial Internet of Things (IOT)-specific models efficiently. Additionally, existing solutions do not provide a centralized decision-making mechanism that can dynamically sequence and manage data flow across different modules, leading to inefficiencies and limited scalability.

Thus, there is a need of techniques which overcome these limitations and to facilitate the seamless integration and communication of multiple LLMs, AI/ML models, and other first principle models in the IOT domain.

The information disclosed in this background of the disclosure section is only for enhancement of understanding of the general background of the invention and should not be taken as an acknowledgement or any form of suggestion that this information forms the prior art already known to a person skilled in the art.

### SUMMARY

In an embodiment, the present disclosure discloses a system to perform context-aware multi-module routing and dynamic workflow execution for assisting a user in an industrial environment according to claim 1. The system comprises a master agent and a plurality of machine learning (ML) modules communicatively coupled with the master agent. The master agent is configured to receive an input comprising one or more user requirements related to the industrial environment. The master agent analyzes the input to identify one or more tasks to fulfil the one or more user requirements and identifies one or more ML modules among the plurality of ML modules suitable to perform the one or more tasks, based on at least one of: historical usage patterns, context of the one or more tasks, and one or more keywords associated with the one or more tasks. The master agent generates a dynamic workflow of sequence for invoking the identified one or more ML modules and executes the dynamic workflow by invoking the identified one or more ML modules according to the sequence. Each of the identified one or more ML modules is selected to perform at least one task among the one or more tasks and generate intermediate results. The master agent further generates a final result based on aggregation of the intermediate results generated by the one or more ML modules by the execution of the dynamic workflow, wherein the final result is provided as a response to the input to assist the user. The dynamic workflow is adjustable based on real-time outcomes of the execution of the dynamic workflow.

In an embodiment, the present disclosure discloses a method of context-aware multi-module routing and dynamic workflow execution for assisting a user in an industrial environment according to the independent method claim. The method comprises receiving, by a master agent, an input comprising one or more user requirements related to the industrial environment. The method further recites analyzing, by the master agent, the input to identify one or more tasks to fulfil the one or more user requirements and identifying one or more machine learning (ML) modules among a plurality of ML modules suitable to perform the one or more tasks, based on at least one of: historical usage patterns, context of the one or more tasks, and one or more keywords associated with the one or more tasks. The method further recites generating, by the master agent, a dynamic workflow of sequence for invoking the identified one or more ML modules. Furthermore, the method recites executing, by the master agent, the dynamic workflow by invoking the identified one or more ML modules according to the sequence. Each of the identified one or more ML modules is selected to perform at least one task among the one or more tasks and generate intermediate results. The method further recites generating, by the master agent, a final result based on aggregation of the intermediate results of the identified one or more ML modules, wherein the final result is provided as a response to the input to assist the user. The dynamic workflow is adjustable based on real-time outcomes of the execution of the dynamic workflow.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE ACCOMPANYING DRAWINGS

The novel features and characteristics of the disclosure are set forth in the appended claims. The disclosure itself, however, as well as a preferred mode of use, further objectives, and advantages thereof, will best be understood by reference to the following detailed description of an illustrative embodiment when read in conjunction with the accompanying figures. One or more embodiments are now described, by way of example only, with reference to the accompanying figures wherein like reference numerals represent like elements and in which:
FIG. 1 illustrates an exemplary environment to assist a user in fulfilling user requirements related to an industrial environment, in accordance with some embodiments of the present disclosure;
FIG. 2 illustrates a detailed block diagram of a system to assist a user in fulfilling user requirements related to an industrial environment, in accordance with some embodiments of the present disclosure;
FIG. 3 illustrate exemplary illustration of the system to assist the user in fulfilling user requirements related to the industrial environment, in accordance with some embodiments of the present disclosure; and
FIG. 4 illustrates a method for assisting the user in fulfilling user requirements related to the industrial environment, in accordance with some embodiments of the present disclosure.

It should be appreciated by those skilled in the art that any block diagram herein represents conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

### DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternatives falling within the scope of the disclosure.

The terms "comprises", "comprising", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or apparatus.

The present disclosure provides a system and method for assisting users in fulfilling industrial requirements by dynamically routing queries to specialized machine learning (ML) modules. The techniques of the present disclosure generates adaptive workflows and leverages context-aware memory for efficient execution.

Particularly, the present disclosure describes a CoPilot foundation framework which is an advanced platform/system to facilitate the seamless integration and communication of multiple large language models (LLMs), AI/ML models, and other first principle models in the Industrial Internet of Things (IOT) domain. The framework comprises a Master LLM module (referred herein as master agent) that dynamically decides which models or modules to invoke based on user prompts, and effectively serve as the brain of the system. This module may be replaced by custom-trained SLMs or LLMs to tailor decision-making processes. The system supports dynamic plugin capability for AI/ML models, LLMs, and other modules, which ensures scalability and flexibility. The system also features a robust master configuration logic that controls the entire setup, enables quick customization and onboarding of new requirements and use cases. The system also includes secure and efficient connections to SQL databases, Blob stores, and Cosmos DBs, integrated with Azure OpenAl PaaS and Azure cognitive services.

The master agent receives the user query/requirements and analyzes the user query to determine necessary tasks to address the user query. The master agent selects appropriate ML modules based on historical usage patterns, query context, and keyword mapping. The master agent constructs a dynamic workflow, executes the identified modules sequentially or in parallel according to the dynamic workflow, and aggregates intermediate results generated by the ML modules into a final response. Additionally, the system employs a context-aware retry mechanism that adapts workflows based on real-time execution outcomes, modifies parameters for selecting the ML modules in case of errors, and selects alternative modules if necessary. The system also retains metadata related to user interactions, which allow for context-aware memory utilization and improved query resolution in subsequent tasks.

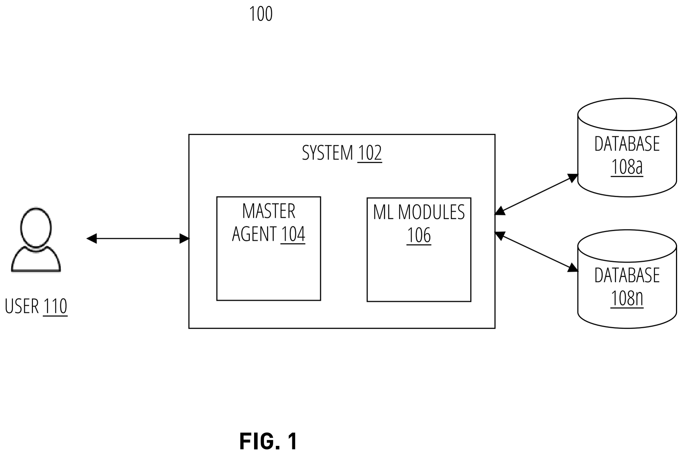

FIG. 1 illustrates an exemplary environment 100 for assisting a user 110 with industrial requirements, in accordance with embodiments of the present disclosure. The environment 100 comprises a system 102 deployed in the industrial environment 100. The system 102 comprises a master agent 104 and a plurality of ML modules 106. The system 102 may be communicatively coupled with various industrial databases such as database 108a to database 108n. These databases may be used to store various information related to industrial environment 100. The master agent 104 may receive the user query/requirements. Upon receiving, the master agent 104 analyzes the user query to determine necessary tasks required to address the user query. The master agent 104 selects appropriate ML modules among the plurality of ML modules 106 based on historical usage patterns, query context, and keyword mapping. The master agent 104 constructs a dynamic workflow to execute the identified modules sequentially or in parallel according to the dynamic workflow, and aggregates intermediate results generated by the ML modules 106 into a final response. Additionally, the system 102 may employ a context-aware retry mechanism that adapts workflows based on real-time execution outcomes. The real-time execution outcomes comprises at least one of: the one or more errors while generation of the intermediate results and the one or more retries by the user. The system 102 may modify parameters for selecting the ML modules in case of errors, and selects alternative modules if necessary. The system also retains metadata related to user interactions, which allow for context-aware memory utilization and improved query resolution in subsequent tasks. The context-aware retry mechanism may comprise performing retries based on one or more of: context of one or more errors occurred while generation of the intermediate results, one or more retries by the user, conversational context, and user interactions.

The detailed functionality of the system 102 is described in detail in the subsequent paragraphs.

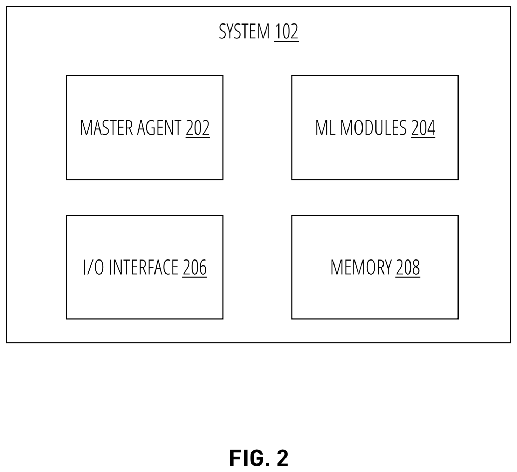

FIG. 2 illustrates a block diagram of the system 104 to perform context-aware multi-module routing and dynamic workflow execution for assisting a user, in accordance with an embodiment of the present disclosure. The system comprises a master agent 202, a plurality of ML modules 204, an I/O interface 206, a memory 208, but not limited thereto. All the elements of the system 102 work in conjunction with each other to assist the user in fulfilling requirements related to the industrial environment 100.

In an embodiment, the system 102 may be implemented on various computing platforms, such as servers, personal computers (PCs), laptops, edge computing devices, and embedded systems. In a server-based implementation, the system 102 may operate on cloud or on-premise servers with high computational capacity suitable for industrial environments where multiple users may interact with the system simultaneously. The master agent 202 and the ML modules 204 may function in a distributed manner by leveraging cloud-based APIs, databases, and computing resources to process the user queries efficiently. In a personal computer (PC) or laptop implementation, the system 102 may be installed locally to allow individual users such as engineers, analysts, and industrial operators to get the assistance. In another embodiment, the system 102 may also be deployed on edge computing devices, where processing may occur closer to data sources such as industrial machines, manufacturing plants, etc. This may reduce latency and enable real-time decision-making, particularly in mission-critical applications. In yet another embodiment, the system 102 may be embedded in IoT-enabled devices and embedded systems and may allow seamless integration with industrial automation platforms, sensors, and control systems. A hybrid implementation may also be possible, where the master agent 202 may operate on a cloud-based server while the ML modules 204 and other components may run on edge devices or local computing infrastructure. This ensures scalability, efficiency, and real-time response handling based on specific deployment needs. In this manner, the system 102 may be customized based on industrial environments, computational requirements, and network connectivity constraints.

In an embodiment, the master agent 202 is an AI-driven orchestration engine that may comprise one or more large language models (LLM) and machine learning (ML) algorithms. The master agent 202 is trained to intelligently process user inputs indicative of user requirements and identify one or more tasks to be performed for fulfilling the user requirements. In an embodiment, the master agent 202 is trained using a structured Model Context Protocol with dynamic prompt tuning and NLP based intent recognition using Sentence-BERT. The system is trained using a combination of pre-existing knowledge and domain-specific data to improve its ability to understand user intent. The mater agent 202 continuously learns by refining its ability to recognize patterns, enhance contextual understanding, and improve the relevance of responses. Additionally, it incorporates feedback from real-world interactions, allowing it to adapt and optimize performance over time.

The master agent 202 may select and invoke the appropriate ML modules and aggregate results thereof to generate meaningful responses. The LLM is the primary reasoning unit and enables the master agent 202 to understand natural language queries, infer user intent, and identify the tasks required to address the user queries. The LLM may be supplemented by ML-based decision models, which may analyze historical usage patterns, task dependencies, and execution success rates to optimally select the ML module(s). In an embodiment, the master agent 202 may be implemented in conjunction with a dedicated hardware processing unit (not shown in figures).

According to an embodiment, the ML modules 204 are also called sub-agents. Each of the ML modules 204 is a specialized AI-driven components designed to handle specific tasks within the system 102. These ML modules 204 may operate independently but are orchestrated by the master agent 202, which dynamically selects and invokes them based on the user requirements and identified tasks. Each of the ML modules 204 is trained to perform a particular function and may be implemented using various AI/ML models, and fine-tuned for specific industrial applications. For example, the ML modules 204 may comprise comprises SQL module, visualization module, charting agent, summarization module, API module, etc., but not limited thereto. The SQL module may generate and execute structured queries to retrieve relevant information from industrial databases. The charting agent may process numerical data and generate visual representations such as graphs, charts, etc. The summarization module may convert lengthy textual information into concise and meaningful summaries using NLP-based models. The API module may interacts with external services to retrieve additional data or trigger automated processes. In an embodiment, the output of one module may serve as the input to another module. For example, a data retrieval module may extract machine performance data, which may then be processed by an anomaly detection module to identify deviations, followed by the visualization module to generate a graphical representation of detected anomalies. Others modules may operate in parallel (i.e., independently), and their outputs may be aggregated by the master agent 202. The master agent 202 and the ML modules 204 have a reinforcement learning-based optimization layer, which allows continuous learning to improve performance over time based on feedback.

In an embodiment, the system 102 may receive a user input indicative of one or more user requirements via the I/O interface 206. The received input may be stored in the memory 208. The input may be any form, such as, but not limited to, prompts, questions, a text file, or a combination thereof. In an exemplary embodiment, the memory 208 may also stores instructions executable by the processing unit. The processing unit may comprise at least one data processor for executing program components for executing user or system-generated requests. The memory 208 may be communicatively coupled to the processing unit or master agent. The memory 208 may store instructions, executable by the processing unit, which, on execution, may cause the processing unit to control various operations of the system 102.

further, the master agent 202 may receive and analyze the input to identify one or more tasks required to fulfill the user requirements. The master agent 202 may analyze historical usage patterns and task context, and also perform keyword mapping. Based on the historical usage patterns, the task context, and the keyword mapping, the master agent 202 may identify one or more suitable ML modules among the plurality of ML modules 204 to execute the identified tasks.

Particularly, upon receiving the user input, the master agent 202 first analyse the user input using natural language processing (NLP) techniques, such as entity recognition and semantic understanding, to extract key elements from the input. The master agent 202 may determine whether the input involves tasks such as data retrieval, analytics, visualization, summarization, or external API interaction, but not limited thereto. If the input is complex, the master agent 202 may divide the input into multiple sub-tasks to ensure that each aspect of the request is executed efficiently. For example, in response to an input like "provide a list of assets for which alerts were generated in last 24 hours and generate a summary with chart", the master agent 202 may identify four distinct tasks: retrieving asset alert data, aggregating the number of alerts per asset, summarizing the results, and generating a visualization.

Upon identifying the tasks required to fulfil the requirement, the master agent 202 may employs keyword mapping and domain-specific routing by comparing extracted query keywords against a knowledge graph that associates specific terms with relevant ML modules. The required information for routing such as domain information and knowledge graph related to each of the ML module may be stored in the memory 208. This process ensures that the most appropriate ML module is assigned for completion of each task. For instance, in the alert report query, the keyword "alerts" maps to the SQL module responsible for data retrieval, "summary" maps to the summarization module, and "chart" maps to the charting agent for visualization. This mapping may prevent misallocation of tasks and ensures that only the most relevant ML modules are selected, which improve accuracy and execution efficiency.

In another embodiment, the master agent 202 may utilize historical usage patterns to determine the most reliable and efficient ML modules for execution. By analyzing past queries, module's performance metrics, and execution success rates, the master agent 202 may select the ML modules 204 that have demonstrated higher accuracy and efficiency in similar scenarios. If multiple modules are available for a specific task, the master agent 202 may select the one that has historically performed well based on response time, accuracy, and failure rates. Additionally, the master agent 202 may evaluate the task context, which may involve analyzing dependencies between tasks, and execution constraints. Some of the tasks may require sequential execution, while others may run in parallel. For example, the SQL module must retrieve asset alert data before the summarization and visualization modules can process it, but other tasks may be executed simultaneously to optimize response time.

After selecting the appropriate ML modules 204, the master agent 202 may generate a dynamic workflow that defines the execution sequence of the selected modules and specifies input parameters for each module. The workflow is not static, and designed to adapt in real time based on the nature of the query, dependencies between tasks, and the outputs. The workflow execution sequence ensures that tasks are performed in the correct order, with intermediate results passed to subsequent modules, when necessary. Some tasks may require sequential execution, where the output of one ML module serves as the input for another, while other tasks may be executed in parallel to optimize processing time. The master agent may determine whether modules should be invoked sequentially or concurrently based on dependencies and resource availability. For example, when generating an alert report, the system may first retrieves asset alert data from a database using the SQL module before passing it to an analytics module for data aggregation. However, the summarization module and charting agent can run in parallel once the raw data is available, in order to reduce response time.

During execution, the master agent 202 may continuously monitor the performance/outcome of each ML module to ensure successful completion of respective tasks. If any module encounters an error or fails to produce the expected output, or experiences a delay, the master agent 202 may trigger a context-aware retry mechanism to address the issue intelligently. This retry mechanism may operate in multiple ways. In an embodiment, the master agent 202 may modify execution parameters to improve the chances of successful processing, such as adjusting query constraints or reformatting input data. In another embodiment, if a particular ML module fails repeatedly, the master agent 202 may select an alternative ML module with similar capabilities to handle the task. The selection of the alternative ML module may be based on historical performance data, which ensure that the master agent 202 prioritize modules that have previously succeeded in similar contexts. In yet another embodiment, if the error is due to missing or ambiguous information in the user query, the master agent may request clarification from the user. In an embodiment, the context-aware retry mechanism comprises performing retries based on one or more of: context of one or more errors occurred while generation of the intermediate results, one or more retries by the user, conversational context, and user interactions.

Further, as the workflow progresses, the master agent 202 may aggregate intermediate results from multiple ML modules to generate the final output. The master agent 202 may combine structured and unstructured data and optimize the response format to match user preferences. The final response may be then refined through additional AI-driven processing, such as summarization, formatting, and error correction, before being delivered to the user.

In an embodiment, the memory 208 also enable the master agent 202 to retain, retrieve, and utilize past interactions to improve task execution and enhance conversational continuity. The master agent 202 may be configured to generate metadata corresponding to various aspects of user input processing, including user input, intermediate results, and the final response. This metadata is structured in a way that preserves the contextual flow of interactions, which allows the system to recall past queries, refine responses based on historical data, and provide a more personalized and coherent conversational experience.

When the master agent 202 executes the dynamic workflow by invoking the ML modules, the intermediate results are generated at various stages, such as data retrieval, analysis, summarization, and visualization. The memory 208 may capture and store these intermediate results, along with relevant metadata in order to ensure that a record of processing of the input is maintained. Additionally, the final result may be linked to the input and intermediate outputs to create a structured memory representation of the entire execution. This metadata may include task dependencies, ML module selection history, execution parameters, processing errors (if any), and retry attempts to ensure that a comprehensive historical record is maintained for future reference. The stored metadata allows the system to facilitate retention and utilization of conversational context for subsequent processing. If a user submits a follow-up query related to a previously executed task, the master agent 202 may retrieve the stored context and provide a response that builds upon prior interactions. For example, if a user initially requests an alert report for a specific asset and later asks for a trend analysis of those alerts, the system does not need to repeat the entire query execution but may instead retrieve previously stored results from the memory 208 and generate insights more efficiently. In an embodiment, the intermediate results along with relevant metadata may be stored in a different database.

Furthermore, the master agent 202 may be configured to store information related to the dynamic workflow in the memory 208, which enables versioning and reuse for contextually relevant conversational interactions. Each dynamic workflow execution may be logged with its task sequence, selected ML modules, execution results, and retry history, which may allow the system to identify and reuse previously successful workflows for similar queries in the future. This also reduces computational overhead, improves response time, and ensures consistency in task execution. If a similar query is submitted, the master agent 202 may refer to the historical workflows, and may either reuse them entirely or modifying them dynamically based on real-time execution conditions.

Thus, by using the memory 208 for workflow storage and versioning, the system may achieve continuous learning, improved efficiency, and enhanced conversational intelligence. This allows the master agent 202 to provide personalized responses, intelligently handle follow-up queries, and optimize workflow execution over time, which makes the system more adaptable and capable of delivering highly relevant, contextually aware, and efficient AI-driven interactions.

Further, the memory 208 also plays a crucial role in enhancing the context-aware retry mechanism by retaining metadata about the past queries, the intermediate results, the final responses, and the execution history. When the master agent 202 encounters an error, incomplete data, or an unexpected result during the workflow execution, the master agent 202 may leverage stored contextual information to modify the retry approach intelligently rather than blindly reexecuting the failed task.

In this manner, the disclosed AI-driven orchestration approach allows the system to intelligently adapt to various types of queries, dynamically optimize task execution, and provide contextually relevant and highly efficient responses. Unlike traditional static workflow systems, which follow predefined execution paths, the master agent 202 may continuously evaluate execution conditions and make real-time adjustments, which results in a more robust, error-tolerant, and intelligent AI-powered system.

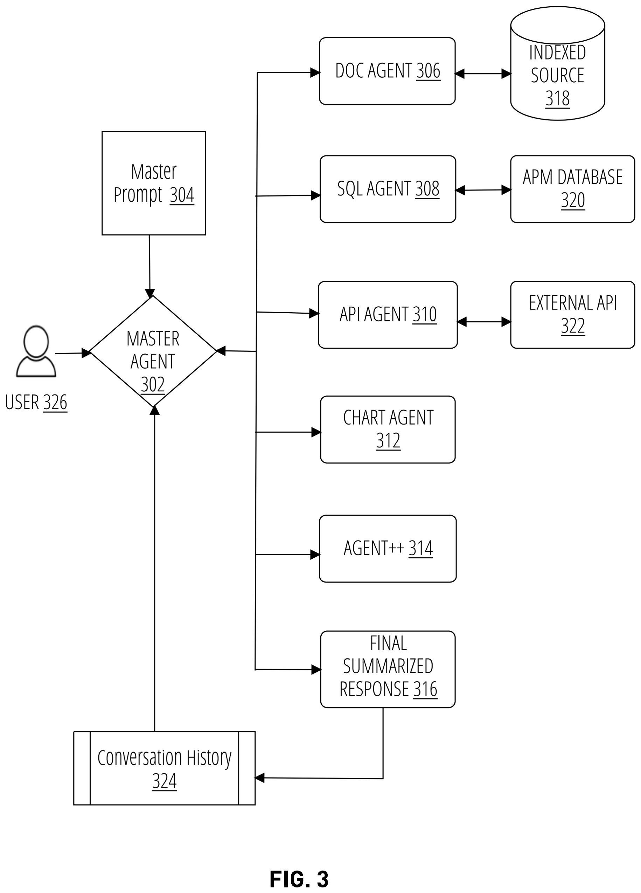

FIG. 3 illustrates the system 102 in accordance with an embodiment of the present disclosure, where the master agent 302 dynamically routes user queries to specialized ML-based sub-agents for processing. The system 102 begins with the user submitting an input, which is received by the master agent 302. The master agent 302 may also receive configured master prompt serves as an instruction that determines which module or action should be used to resolve a user query. The master prompt guides the master agent 202 in selecting the appropriate approach, whether by directing the request to a specific agent, retrieving relevant information, or performing a necessary operation. This ensures accurate and efficient query resolution.

Upon analyzing the input, the master agent 302 identifies relevant tasks and selects appropriate ML-based sub-agents to execute them. These sub-agents may comprise a Doc agent 306, a SQL agent 308, a API agent 310, a chart agent 312, and agent++ 314, but not limited thereto. The Doc agent 306 may be responsible for retrieving information from indexed document sources. The SQL agent 308 may transforms the input into structured database commands and fetch results from APM database 320. The API agent 310 may enables interactions with external APIs 322 to integrate real-time data. Additionally, the chart agent 312 may generate graphical or statistical representations. Whereas, the agent++ 314 may handle specialized or undefined operations that do not fit within the predefined modules. The master agent 302 may dynamically assigns tasks to these sub-agents based on the nature of the query and the required data sources. Once the sub-agents execute their respective tasks, they return intermediate results. The intermediate results may be combined to generate final summarized response 316. The master agent 302 may continuously monitor execution and ensure data aggregation, refinement, and contextual enhancement before generating the final response. The final response may be further structured and presented to the user in preferred format.

Further, to maintain contextual awareness and improve future interactions, the conversation history 324 may be updated by storing relevant metadata, such as the input, intermediate results, and the final response. This allows seamless conversational recall, and optimization of future query resolution. In this manner, the system ensures intelligent task execution, efficient query routing, and dynamically adaptive responses that enhance user experience and operational efficiency.

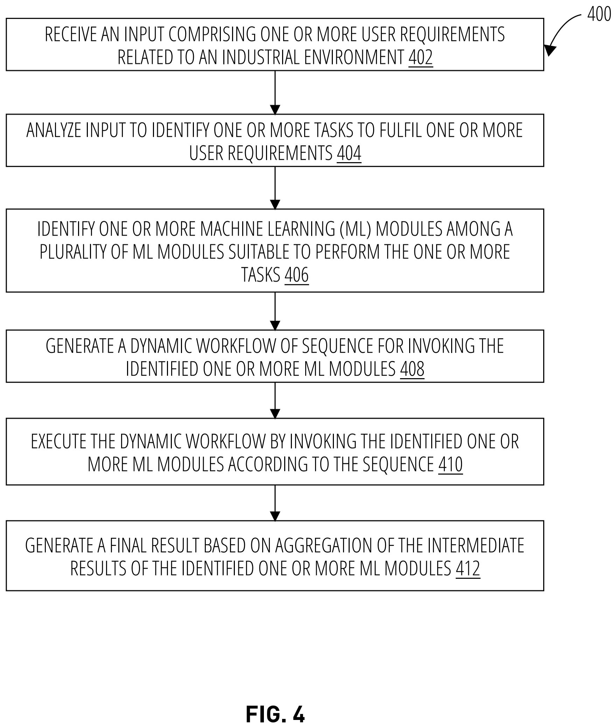

Figure 4 shows an exemplary flow chart illustrating method steps of performing context-aware multi-module routing and dynamic workflow execution for assisting a user in an industrial environment, in accordance with some embodiments of the present disclosure. As illustrated in Figure 4, the method 400 may comprise one or more steps. The method 400 may be described in the general context of computer executable instructions. Generally, computer executable instructions can include routines, programs, objects, components, data structures, procedures, modules, and functions, which perform particular functions or implement particular abstract data types. The method 400 may performed by the system 102 illustrated in FIG. 1- FIG. 3.

The order in which the method 400 is described is not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

In step 402, the method 400 receives an input comprising one or more user requirements related to an industrial environment. At step 404, method 400 recites analyzing the input to identify one or more tasks to fulfil the one or more user requirements. At step 406, method 400 identifies one or more machine learning (ML) modules among a plurality of ML modules suitable to perform the one or more tasks. The identification may be performed based on at least one of: historical usage patterns, context of the one or more tasks, and one or more keywords associated with the one or more tasks. Particularly, the master agent 202 may determine the historical usage patterns, the context of the one or more tasks, and the one or more keywords associated with the one or more tasks. The one or more keywords and the context of the one or more tasks may be mapped with domain-specific information of the plurality of ML modules and the historical usage patterns to identify the one or more ML modules. The domain-specific information of the plurality of ML modules is stored in the memory 208.

At step 408, method 400 generates a dynamic workflow of sequence for invoking the identified one or more ML modules. The information related to the dynamic workflow may be stored in the memory 208 to allow versioning and reuse for facilitating contextually relevant conversational interactions. The dynamic workflow is adjustable based on real-time outcomes of the execution of the dynamic workflow, using a context-aware retry mechanism.

At step 410, method 400 executes the dynamic workflow by invoking the identified one or more ML modules according to the sequence. Each of the identified one or more ML modules may be selected to perform at least one task among the one or more tasks and generate intermediate results. The intermediate results generated by at least one module of the identified one or more ML modules may be supplied as an input to at least one other ML module of the identified one or more ML modules as per the sequence. In another embodiment, the real-time outcomes of the execution of the dynamic workflow may be determined. The real-time outcomes may comprise comprises at least one of: one or more errors while generation of the intermediate results and one or more retries by the user. The dynamic workflow in real-time may be adjusted based on the real-time outcomes, using the context-aware retry mechanism. The context-aware retry mechanism comprises performing retries based on context of the one or more errors while generation of the intermediate results, the one or more retries by the user, conversational context, and user interactions. Further, the adjusting of the dynamic workflow may comprise performing at least one of: modifying one or more parameters of the one or more ML modules and selecting alternative ML module(s) for tailored retries using conversational information and real-time outcomes information. At step 412, method 400 generates a final result based on aggregation of the intermediate results of the identified one or more ML modules. The final result may be provided as a response to the input.

The method further recites generating a metadata corresponding to a combination of the input, the intermediate results, and the final result. The metadata indicates conversational context of the input, the intermediate results, and the final result. The generated metadata is stored in a memory to facilitate retention and utilization of the conversational context for subsequent processing.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise. The terms "a", "an" and "the" mean "one or more", unless expressly specified otherwise.

A description of an embodiment with several components in communication with each other does not imply that all such components are required. On the contrary, a variety of optional components are described to illustrate the wide variety of possible embodiments of the invention.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article, or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The illustrated operations of Figure 4 show certain events occurring in a certain order. In alternative embodiments, certain operations may be performed in a different order, modified, or removed. Moreover, steps may be added to the above-described logic and still conform to the described embodiments. Further, operations described herein may occur sequentially or certain operations may be processed in parallel. Yet further, operations may be performed by a single processing unit or by distributed processing units.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the disclosure of the embodiments of the invention is intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

### LISTING OF DRAWING ELEMENTS

100 environment
102 system
104 master agent
106 ML modules
108a database
108n database
110 user
202 master agent
204 ML modules
206 I/O interface
208 memory
302 master agent
304 master prompt
306 Doc agent
308 SQL agent
310 API agent
312 chart agent
314 agent++
316 final summarized response
318 indexed source
320 APM database
322 external API
324 conversation history
326 user
400 method
402-412 steps

## Claims

1. A system to perform context-aware multi-module routing and dynamic workflow execution for assisting a user in an industrial environment, comprising:
a master agent;
a plurality of machine learning (ML) modules communicatively coupled with the master agent,
wherein the master agent is configured to:
receive an input comprising one or more user requirements related to the industrial environment;
analyze the input to identify one or more tasks to fulfil the one or more user requirements;
identify one or more ML modules among the plurality of ML modules suitable to perform the one or more tasks, based on at least one of: historical usage patterns, context of the one or more tasks, and one or more keywords associated with the one or more tasks;
generate a dynamic workflow of sequence for invoking the identified one or more ML modules;
execute the dynamic workflow by invoking the identified one or more ML modules according to the sequence, wherein each of the identified one or more ML modules is selected to perform at least one task among the one or more tasks and generate intermediate results; and
generate a final result based on aggregation of the intermediate results generated by the one or more ML modules by the execution of the dynamic workflow, wherein the final result is provided as a response to the input to assist the user, and
wherein the dynamic workflow is adjustable based on real-time outcomes of the execution of the dynamic workflow.

2. The system of claim 1, wherein the intermediate results generated by at least one module of the identified one or more ML modules is supplied as an input to at least one other ML module of the identified one or more ML modules as per the sequence.

3. The system of claim 1 or 2, further comprises:
a memory communicatively coupled with the master agent and configured to store domain-specific information of the plurality of ML modules,
wherein to identify the one or more ML modules, the master agent is configured to:
determine the historical usage patterns, the context of the one or more tasks, and the one or more keywords associated with the one or more tasks; and
map the one or more keywords and the context of the one or more tasks with the domain-specific information of the plurality of ML modules and the historical usage patterns to identify the one or more ML modules.

4. The system of any of the preceding claims, wherein the master agent is further configured to:
determine the real-time outcomes of the execution of the dynamic workflow, wherein the real-time outcomes comprises at least one of: one or more errors occurred while generation of the intermediate results and one or more retries by the user; and
adjust the dynamic workflow in real-time based on the real-time outcomes, using a context-aware retry mechanism, wherein the context-aware retry mechanism comprises performing retries based on context of the one or more errors while generation of the intermediate results, the one or more retries by the user, conversational context, and user interactions, and
wherein to adjust the dynamic workflow, the master agent is configured to perform at least one of: modify one or more parameters of the one or more ML modules and select alternative ML module(s) for tailored retries using conversational information and real-time outcomes information.

5. The system of any of the preceding claims, wherein the master agent is further configured to:
generate a metadata corresponding to a combination of the input, the intermediate results, and the final result, wherein the metadata indicates conversational context of the input, the intermediate results, and the final result; and
store the generated metadata in a memory to facilitate retention and utilization of the conversational context for subsequent processing.

6. The system of any of the preceding claims, wherein the master agent is further configured to store information related to the dynamic workflow in a memory to allow versioning and reuse for facilitating contextually relevant conversational interactions.

7. The system of any of the preceding claims, wherein the master agent comprises at least one of: one or more large language model (LLM) and one or more AI/ML model, and wherein the master agent is trained to select and orchestrate the plurality of ML models.

8. A method of context-aware multi-module routing and dynamic workflow execution for assisting a user in an industrial environment, the method comprising:
receiving, by a master agent, an input comprising one or more user requirements related to the industrial environment;
analyzing, by the master agent, the input to identify one or more tasks to fulfil the one or more user requirements;
identifying, by the master agent, one or more machine learning (ML) modules among a plurality of ML modules suitable to perform the one or more tasks, based on at least one of: historical usage patterns, context of the one or more tasks, and one or more keywords associated with the one or more tasks;
generating, by the master agent, a dynamic workflow of sequence for invoking the identified one or more ML modules;
executing, by the master agent, the dynamic workflow by invoking the identified one or more ML modules according to the sequence, wherein each of the identified one or more ML modules is selected to perform at least one task among the one or more tasks and generate intermediate results; and
generating, by the master agent, a final result based on aggregation of the intermediate results of the identified one or more ML modules, wherein the final result is provided as a response to the input to assist the user, and
wherein the dynamic workflow is adjustable based on real-time outcomes of the execution of the dynamic workflow.

9. The method of claim 8, wherein the intermediate results generated by at least one module of the identified one or more ML modules is supplied as an input to at least one other ML module of the identified one or more ML modules as per the sequence.

10. The method of claim 8 or 9, wherein identifying the one or more ML modules comprises:
determining the historical usage patterns, the context of the one or more tasks, and the one or more keywords associated with the one or more tasks; and
mapping the one or more keywords and the context of the one or more tasks with domain-specific information of the plurality of ML modules and the historical usage patterns to identify the one or more ML modules,
wherein the domain-specific information of the plurality of ML modules is stored in a memory.

11. The method of any of the claims 8 - 10, further comprises:
determining the real-time outcomes of the execution of the dynamic workflow, wherein the real-time outcomes comprises at least one of: one or more errors while generation of the intermediate results and one or more retries by the user; and
adjusting the dynamic workflow in real-time based on the real-time outcomes, using a context-aware retry mechanism, wherein the context-aware retry mechanism comprises performing retries based on context of the one or more errors while generation of the intermediate results, the one or more retries by the user, conversational context, and user interactions, and
wherein to adjusting the dynamic workflow comprises performing at least one of: modifying one or more parameters of the one or more ML modules and selecting alternative ML module(s) for tailored retries using conversational information and real-time outcomes information.

12. The method of any of the claims 8 - 11, further comprises:
generating a metadata corresponding to a combination of the input, the intermediate results, and the final result, wherein the metadata indicates conversational context of the input, the intermediate results, and the final result; and
storing the generated metadata in a memory to facilitate retention and utilization of the conversational context for subsequent processing.

13. The method of any of the claims 8 - 12, further comprises:
storing information related to the dynamic workflow in a memory to allow versioning and reuse for facilitating contextually relevant conversational interactions.

14. The method of any of the claims 8 - 13, wherein the master agent comprises at least one of: one or more large language model (LLM) and one or more AI/ML model, and wherein the master agent is trained to select and orchestrate the plurality of ML models.
